# EUROPEAN PATENT APPLICATION

(11) **EP 4 714 709 A1**
(43) Date of publication of application: **25.03.2026**
(21) Application number: 24807313.2
(22) Date of filing: 06.02.2024
(51) Int. Cl.: B60K 26/02, A01B 33/08, B60K 20/02, B60T 7/08, G05G 13/00

(54) **AGRICULTURAL WORK VEHICLE AND CONTROL METHOD THEREFOR**

(30) Priority: 18.05.2023 KR 20230064091
(71) Applicant: LS Mtron Ltd., Anyang-si, Gyeonggi-do 14119 (KR)
(72) Inventor: CHEONG, Seungho, Anyang-si Gyeonggi-do 14119 (KR); SHIN, Ok Shik, Anyang-si Gyeonggi-do 14119 (KR); YU, Ji Hun, Anyang-si Gyeonggi-do 14119 (KR); LEE, Jin Woong, Anyang-si Gyeonggi-do 14119 (KR); PARK, Jin Kam, Anyang-si Gyeonggi-do 14119 (KR)
(74) Representative: K&L Gates LLP
(86) International application number: PCT/KR2024/001766
(87) International publication number: WO 2024/237430

(57) **Abstract**

The present invention relates to an agricultural work vehicle and a method of controlling the same. The agricultural work vehicle according to the present invention is provided with forward and reverse switches on the outside thereof to enable the driving of the work vehicle to be manipulated from the outside of the work vehicle. According to the present invention, there is the effect of facilitating the work of coupling an implement to the agricultural work vehicle while ensuring stability.

## Description

### Technical Field

The present invention relates to an agricultural work vehicle, and more particularly to control that is performed by external manipulation switches.

### Background Art

Agricultural tractors are a type of agricultural work vehicles.

In agricultural tractors, the power of an engine is used not only to drive a vehicle forward and rearward, but also to operate separately coupled implements (a loader, an excavator, a rotary cutter, a mower, and/or the like) and to execute some functions for the installation and separation of implements.

Generally, implements may be mounted on an agricultural tractor, either on the front or rear of the agricultural tractor, or at a lower position between front and rear wheels, depending on the type of implement.

A driver mounts or separates one or more implements according to the needs of work. In this case, due to the nature of an agricultural work vehicle, some functions of the vehicle need to be used to mount or separate front and rear implements. Accordingly, the driver performs the work of installing or separating the implements from the outside while keeping the ignition of the vehicle turned on. In this case, there are provided external switches configured to allow the driver to control hydraulics and the functions of the vehicle from the outside, thereby enhancing the driver's convenience. This will be described using the case of coupling a plow to an agricultural tractor as an example.

First, the driver of the agricultural tractor appropriately locates the vehicle in front of the plow which is an implement. The driver hydraulically adjusts the height of an end of a connection link by using a lifting switch and a lowering switch among the external switches. This ensures that the end of the connection link is placed at a height suitable for coupling the plow to the vehicle. Then, in the state, the plow is coupled to the connection link.

Meanwhile, when the plow is coupled to the agricultural tractor, it is necessary to precisely set the relative positions of the agricultural tractor and the plow, in addition to adjusting the height of the end of the connection link, in some cases. To set the relative positions, it is more convenient to move the agricultural tractor with a forward and reverse drive function than to move the plow without a forward and reverse drive function.

Therefore, the driver needs to position the plow at a specific location first and then set the accurate forward and rearward positions of the agricultural tractor and the plow while moving the agricultural tractor forward and rearward. In this case, it is difficult for the driver to accurately determine the forward and rearward positions of the agricultural tractor and the plow, so that it is necessary for two persons to work together. Alternatively, it is necessary for the driver to precisely move the position of the agricultural tractor while repeatedly boarding and alighting from the agricultural tractor and checking the forward and rearward positions of the agricultural tractor and the plow.

### [Related Art Literature]

### [Patent Literature]

(Patent Document 1) Korean Patent No. 10-2330151
(Patent Document 2) Korean Patent Application Publication No. 10-2019-0023227

### Disclosure

### Technical Problem

The present invention has been conceived from the following exploration:

First, there has been exploration into the technology that eliminates the need for a driver to repeatedly board and alight from an agricultural work vehicle when coupling an implement to the agricultural work vehicle.

Second, there has been exploration into the technology that enables only a single driver to install an implement on an agricultural work vehicle.

Third, there has been exploration into the technology that enables a driver to check whether there is an erroneous operation and address the erroneous operation.

### Technical Solution

According to the present invention, there is provided an agricultural work vehicle, including: a transmission configured to be electronically controlled, and provided to vary the speed of a work vehicle; a controller configured to control the transmission; main manipulation parts provided in a region, in which a driver's seat is present, to input commands to drive the work vehicle to the controller; external switches configured to input commands to move the work vehicle forward or rearward from the outside independently of the main manipulation parts; and a mode switch configured to set external manipulation mode in which the external switches can be manipulated; wherein the external switches include: a forward switch configured to input a forward command to move the work vehicle forward; and a reverse switch configured to input a reverse command to move the work vehicle rearward.

The agricultural work vehicle may further include a sensitivity switch configured to adjust the sensitivity of a control signal from the controller; and, when a forward command is input by manipulating the forward switch or a reverse command is input by manipulating the reverse switch, a current value of the control signal from the controller may reach a determination value, determined by a target vehicle speed, with a gradient set by the sensitivity switch.

The external switches may further include a neutral switch configured to control the speed of the work vehicle to 0 km/h.

The controller may control the speed of the work vehicle to 0 km/h when the manipulation of the forward switch or reverse switch is released.

The agricultural work vehicle may further include an electronic brake configured to be electronically controlled, and the controller may release the engagement of the electronic brake only during a time interval in which the work vehicle is to be moved forward or backward by the manipulation of the external switches.

According to the present invention, there is provided a method of controlling an agricultural work vehicle, the method including: a deactivation step in which external manipulation mode is deactivated; an activation step in which the external manipulation mode is activated after the deactivation step, so that the work vehicle can be moved forward or backward by manipulating a forward switch or reverse switch from the outside; and a manipulation standby step in which the manipulation of the forward switch or reverse switch is waited for before entering the activation step from the deactivation step; wherein, when a mode switch is manipulated into the external manipulation mode by a driver and a first entry condition for entry to the manipulation standby step from the deactivation step and a second entry condition for entry to the activation step from the manipulation standby step are satisfied, the method may enter the activation step.

The first entry condition may include 'a gear is engaged,' 'a parking brake is released,' and 'an engine RPM satisfies a predetermined condition.'

When the first and second entry conditions are satisfied in a state in which a standby maintenance condition for the maintenance of the manipulation standby step has been satisfied, the method may enter the activation step.

The standby maintenance condition may be 'a vehicle speed is 0 km/h.'

The second entry condition may include 'a vehicle speed is maintained at 0 km/h for a predetermined period of time' and 'the first entry condition is maintained continuously.'

When the second entry condition is not satisfied, the method may enter the deactivation step from the manipulation standby step.

When a forward command is input by manipulating the forward switch or a reverse command is input by manipulating the reverse switch in the activation step, a current value of a control signal from a controller may reach a determination value, determined by a target vehicle speed, with a set gradient.

When a vehicle speed exceeds a first limit vehicle speed, which is the target vehicle speed, and a second limit vehicle speed, which is set to be higher than the first limit vehicle speed, in the activation step, the work vehicle may be stopped.

In an intermediate range higher than the first limit vehicle speed but lower than the second limit vehicle speed, control intended to return the vehicle speed to the first limit vehicle speed may not be performed.

When a neutral switch is manipulated by the driver in the activation step, a vehicle speed may be returned to 0 km/h.

When the work vehicle is equipped with an electronic brake, the first and second entry conditions may include 'the engagement of a brake is maintained.'

### Advantageous Effects

According to the present invention, the following advantages are achieved:

First, there is no need for a driver to repeatedly board and alight from an agricultural work vehicle when attaching an implement to the agricultural work vehicle, so that user convenience is improved.

Second, a driver may set the position of an agricultural work vehicle from the outside while moving it forward and rearward, so that even a single driver may install an implement on the agricultural work vehicle.

Third, it may be possible to ensure stability and safety while manipulating the forward and reverse movement of an agricultural work vehicle from the outside.

Therefore, ultimately, it may be possible to easily perform the work of installing or separating an implement on or from an agricultural work vehicle while ensuring stability and safety.

### Description of Drawings

FIG. 1 is a block diagram of an agricultural tractor according to a first embodiment of the present invention;
FIG. 2 is a flowchart of a control method performed in the agricultural tractor of FIG. 1;
FIGS. 3 and 4 are reference diagrams illustrating operational example 1 of the agricultural tractor of FIG. 1;
FIG. 5 is a reference diagram illustrating operational example 2 of the agricultural tractor of FIG. 1;
FIGS. 6 and 7 are reference diagrams illustrating an operational example of an agricultural tractor according to a first modification of the agricultural tractor according to the first embodiment of FIG. 1;
FIGS. 8 and 9 are reference diagrams illustrating an operational example of an agricultural tractor according to a second modification of the agricultural tractor according to the first embodiment of FIG. 1;
FIG. 10 is a block diagram of an agricultural tractor according to a second embodiment of the present invention; and
FIG. 11 is a reference diagram illustrating an operational example of the agricultural tractor of FIG. 10.

### Mode for Invention

Preferred embodiments of the present invention will be described with reference to the accompanying drawings. For brevity of description, descriptions of well-known components and redundant descriptions will be omitted or abridged as much as possible.

The present invention can be applied to an agricultural work vehicle (hereinafter referred to as the "work vehicle"). Moreover, the present invention is more suitable for a work vehicle that can perform work through the attachment or detachment of implements. Accordingly, the following description will be given using an agricultural tractor, which is a representative type of agricultural work vehicle that can perform work through the attachment or detachment of implements, as an example.

### <First Embodiment>

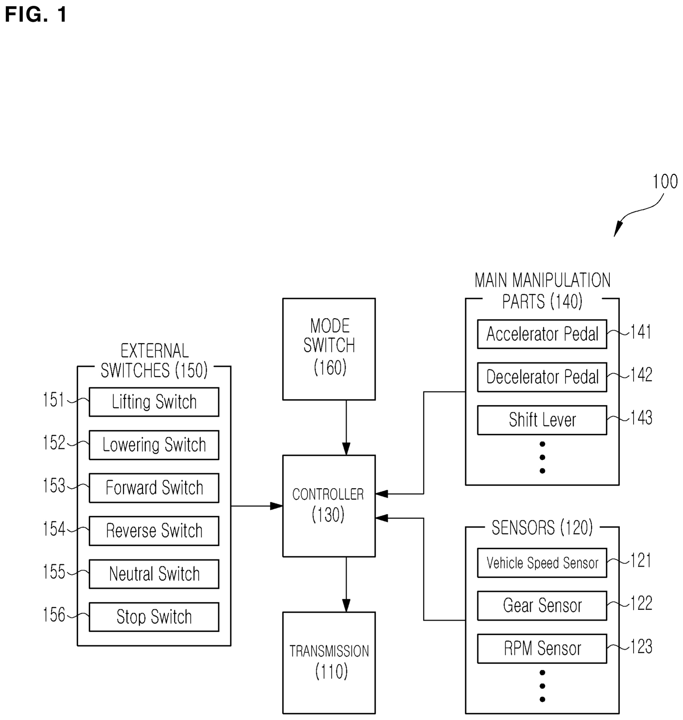

FIG. 1 is a block diagram of an agricultural tractor 100 according to a first embodiment of the present invention.

The agricultural tractor 100 of FIG. 1 includes a transmission 110, sensors 120, a controller 130, main manipulation parts 140, external switches 150, and a mode switch 160.

The transmission 110 is provided to vary the speed of the agricultural tractor 100.

For reference, the variation of the speed referred to in the present invention is primarily performed in the form of increasing the speed from 0 km/h to a specific target vehicle speed or returning the speed from the target vehicle speed to 0 km/h.

According to the present invention, the transmission 110 may be electronically controlled. For example, a hydrostatic transmission may be considered for the electronically controllable transmission 110. The hydrostatic transmission has a swash plate that can be rotated by electronic control. The hydrostatic transmission performs continuously variable gear shifting by rotating the swash plate through the operation of an actuator.

The sensors 120 are provided to collect information required by the controller 130. That is, the information detected by the sensors 120 is provided to the controller 130.

For example, the sensors 120 may include a vehicle speed sensor 121. The vehicle speed sensor 121 detects the speed of the agricultural tractor 100, and transmits this information to the controller 130.

For example, the sensors 120 may include a gear sensor 122. The gear sensor 122 detects the current gear of the agricultural tractor 100, and transmits this information to the controller 130.

For example, the sensors 120 may include an RPM sensor 123. The RPM sensor 123 detects the RPM of the engine (or a motor in the case of an electric vehicle) of the agricultural tractor 100, and transmits this information to the controller 130.

The controller 130 is provided to control the transmission 110.

In particular, the controller 130 transmits a control signal to the transmission 110 based on the information collected from the sensors 120 when a driver attempts to drive the agricultural tractor 100 via the external switches 150. The transmission 110 then performs gear shifting according to the control signal.

The main manipulation parts 140 are provided to input commands for the driving of the agricultural tractor 100 to the controller 130, and are arranged in a region in which a driver's seat is present. Accordingly, the main manipulation parts 140 may be manipulated by the driver in the state of being seated in the driver's seat. The main manipulation parts 140 may include, for example, an accelerator pedal 141, a decelerator pedal 142, and a shift lever 143.

The accelerator pedal 141 is used to accelerate the agricultural tractor 100. When a hydrostatic transmission is employed, a pair of forward and reverse accelerator pedals may be provided.

The decelerator pedal 142 is used to decelerate the agricultural tractor 100. The decelerator pedal 142 may be a brake pedal.

The shift lever 143 is primarily provided to engage a gear or set the gear to neutral in the present invention.

When the gear is engaged by manipulating the shift lever 143, the output shaft power of the transmission 110 is transmitted to a drive shaft. Accordingly, forward or reverse power is generated in the wheels of the agricultural tractor 100.

When the engagement of the gear is released by manipulating the shift lever 143 and the transmission is set to neutral, the output shaft power of the transmission 110 is not transmitted to the drive shaft. Accordingly, power is not transmitted to the wheels of the agricultural tractor 100.

The external switches 150 are provided for the driver to alight from the agricultural tractor 100 and drive the agricultural tractor 100.

The external switches 150 are provided on the external wall of the agricultural tractor 100 so that the driver who has alighted from the agricultural tractor 100 may manipulate them. However, according to the present invention, when the driver outside the agricultural tractor 100 couples an implement to the agricultural tractor 100, it is necessary to continuously check the relative positions of the agricultural tractor 100 and the implement and surrounding conditions. Accordingly, it is preferable to provide the external switches 150 in a portion for which a clear field of view for such checking is ensured.

The external switches 150 may include a lifting switch 151, a lowering switch 152, a forward switch 153, a reverse switch 154, a neutral switch 155, and a stop switch 156.

The lifting switch 151 is used to lift the end of a connection link (a portion coupled to the implement) by using hydraulic pressure, and the lowering switch 152 is used to lower the end of the connection link by using hydraulic pressure. In this case, the connection link is a structure provided on the agricultural tractor 100 and used to mount the implement onto the agricultural tractor 100.

The driver may lift the end of the connection link by manipulating the lifting switch 151, and may lower it by manipulating the lowering switch 152. That is, the driver may adjust the height of the end of the connection link, to which the implement can be coupled, by using the lifting switch 151 and lowering switch 152. However, it should be understood that the present invention is not necessarily applicable only when the end of the connection link can be lifted and lowered. For example, depending on the type of work vehicle, the forward and rearward movement of the work vehicle may be required even when coupling via the connection link is not used. Accordingly, the present invention should be interpreted as applicable to any case where it is necessary to move a work vehicle forward/rearward from the outside, regardless of the presence of the connection link.

The forward switch 153 is used to input a forward command to move the agricultural tractor 100 forward.

The reverse switch 154 is used to input a reverse command to move the agricultural tractor 100 rearward.

Therefore, the driver may move the agricultural tractor 100 forward or rearward by manipulating the forward switch 153 and the reverse switch 154. That is, the driver may appropriately set the relative positions, at which the agricultural tractor 100 and the implement are coupled to each other, by using the forward switch 153 and the reverse switch 154.

The forward switch 153 and the reverse switch 154 eliminate the need for the driver to repeatedly board and alight from the agricultural tractor 100 to check and set the relative positions of the agricultural tractor 100 and the implement.

According to the present embodiment, when the manipulation of the forward switch 153 and the reverse switch 154 are released, the controller 130 recognizes this as a command to return the vehicle speed to 0 km/h. That is, when the forward switch 153 or reverse switch 154 remains manipulated, the controller 130 operates to continue to move the agricultural tractor 100. When the manipulation of the forward switch 153 or reverse switch 154 is released, the controller 130 operates to return the vehicle speed to 0 km/h.

The neutral switch 155 is used to input a neutral command to return the vehicle speed of the agricultural tractor 100 to 0 km/h. When the driver needs to return the vehicle speed to 0 km/h while driving the agricultural tractor 100 through external manipulation, the neutral switch 100 is manipulated. The controller 130 then controls the transmission 110 to return the vehicle speed to 0 km/h. According to the first embodiment, the driver may control the agricultural tractor 100 to 0 km/h by releasing the manipulation of the forward switch 153 or reverse switch 154. Accordingly, the neutral switch 155 may be an optional component. However, since there may be conditions such as the erroneous operation of the forward switch 153 and the reverse switch 154, it may be more preferably considered to add the neutral switch 155.

The stop switch 156 is used to input a stop command to stop the agricultural tractor 100. When an accidental emergency situation occurs in external manipulation mode, the driver may stop the agricultural tractor 100 by manipulating the stop switch 156.

A method for stopping the agricultural tractor 100 by using the stop switch 156 may be a method of turning off an engine. In this case, when the stop switch 156 is manipulated, the controller 130 turns off the engine, so that the agricultural tractor 100 may be stopped. As will be described later, the gear is engaged in external manipulation mode. Accordingly, when the engine is turned off, an engine brake is applied, so that the agricultural tractor 100 may be stopped.

A method for stopping the agricultural tractor 100 by using the stop switch 156 may be a method of applying a brake. In this case, when the stop switch 156 is manipulated, the controller 130 rapidly applies the brake, so that the agricultural tractor 100 may be stopped. However, this requires the brake to be electronically controlled.

The mode switch 160 is provided to set the external manipulation mode in which the external switches 150 can be manipulated.

The driver may input an execution command to the controller 130 to execute external manipulation mode by manipulating the mode switch 160. The controller 130 then controls the agricultural tractor 100 according to a control method to be described below while operating in the external manipulation mode.

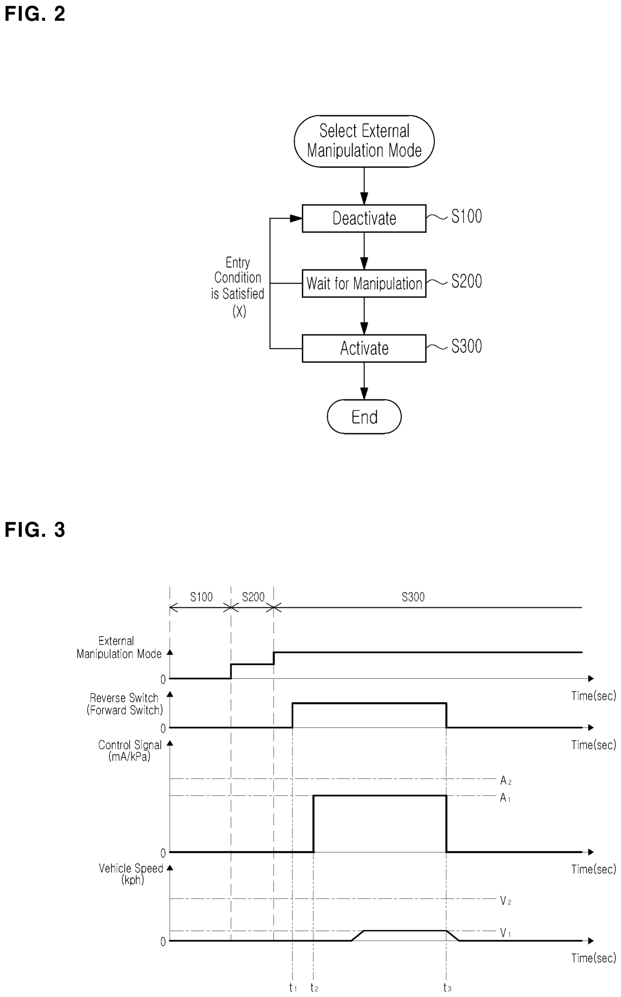

Next, a method of controlling the agricultural tractor 100 having the above-described configuration will be described with reference to FIG. 2.

### 1. Deactivation Step <S100>

When a driver selects and sets external manipulation mode by manipulating the mode switch 160, the controller 130 checks the current status of the agricultural tractor 100. During this checking process, the external manipulation mode remains deactivated.

The checking is performed to determine whether a first entry condition is satisfied.

The first entry condition is a condition for entry to a manipulation standby step <S200>, which will be described below.

The first entry condition may be 'the gear is engaged,' 'the parking brake is released,' and/or 'the RPM of the engine satisfies a predetermined condition.' In particular, the detailed condition 'the gear is engaged' is essentially required. The reason for this is that without the engagement of the gear, the agricultural tractor 100 may not be moved forward or rearward by external manipulation.

To check the first entry condition, the controller 130 uses the information collected from the gear sensor 122 and the RPM sensor 123 and information regarding the status of a parking brake.

For the agricultural tractor 100 to be moved forward or rearward through external manipulation, the gear needs to remain engaged even when the driver alights from a vehicle.

Furthermore, for the agricultural tractor 100 to be moved forward or rearward appropriately through external manipulation, the parking brake needs to be released.

To ensure stable switching to the external manipulation mode, the RPM of the engine needs to satisfy a specific condition. This condition may be 'the RPM of the engine is an idle RPM,' or 'the engine has an appropriate RPM for maintaining the vehicle speed at or near 0 km/h.'

When the engine is turned off and is at 0 RPM, the agricultural tractor 100 cannot be moved forward and rearward by external manipulation, which is inappropriate. Furthermore, when the RPM is excessively high and thus the agricultural tractor 100 may be accidently operated, there is a risk that the accidental operation may endanger the driver or nearby persons. Accordingly, when not only a case where the agricultural tractor 100 is on flat ground but also a case where the agricultural tractor 100 is on a slight slope are taken into consideration, the condition 'the RPM of the engine is an idle RPM' or the condition 'the engine has an appropriate RPM for maintaining the vehicle speed at or near 0 km/h' may be most preferably considered.

When any one of the detailed conditions of the first entry condition is not satisfied as described above, the controller 130 remains in step S100. It will be apparent that the controller 130 may be implemented to notify the driver of any unsatisfied detailed condition.

The notification may be provided via a display or sound.

### 2. Manipulation Standby Step <S200>

Once the overall checking in step S100 has been completed and the first entry condition has been satisfied, the method enters step S200, which is a manipulation standby step.

In step S200, the method waits for the manipulation of the forward switch 153 or reverse switch 154 before entering the activation step <S300>, to be described later, from step S100, and performs required checking.

Furthermore, in step S200, an operation that satisfies a standby maintenance condition may be performed.

The standby maintenance condition may be 'the vehicle speed is 0 km/h.' Accordingly, when the first entry condition is satisfied but the vehicle speed is not 0 km/h, an operation is performed at step S200 to bring the vehicle speed to 0 km/h. To this end, the controller 130 may control the transmission 110 to bring the vehicle speed to 0 km/h. This will be described in more detail later.

Meanwhile, in step S200, the controller 130 checks whether a second entry condition is satisfied.

The second entry condition is a condition for entry to the activation step <S300> in which external manipulation mode is activated, which will be described below.

The second entry condition may include 'the vehicle speed of 0 km/h is maintained for a predetermined period of time' and 'the first entry condition is maintained continuously.'

For example, even when the vehicle speed of 0 km/h, which is the standby maintenance condition, is satisfied, whether that condition can be stably maintained is crucial for the safety of the driver who need to alight from the vehicle and nearby persons. Accordingly, even when the driver alights from the vehicle in the state in which the standby maintenance condition is satisfied, it is necessary to remain in the state in which the vehicle speed of 0 km/h can be maintained. To this end, 'the vehicle speed of 0 km/h is maintained for a predetermined period of time' is required for one detailed condition of the second entry condition.

Furthermore, one detailed condition of the second entry condition is 'the first entry condition is maintained continuously.' Since the first entry condition is the minimum condition required for external manipulation, 'the first entry condition is maintained continuously' naturally becomes one detailed condition of the second entry condition.

When even any one of the first entry condition, second entry condition, and the standby maintenance condition is not satisfied, the controller 130 returns the method from step S200 to step S100.

For reference, the detailed conditions presented above for the first entry condition, the second entry condition, and the standby maintenance condition may be the most preferable specific examples. However, when there are detailed conditions required for more stable and convenient external manipulation, they may be added or removed.

### 3. Activation Step <S300>

When the first and second entry conditions are satisfied in the state in which the standby maintenance condition is satisfied in step S200, the method enters step S300, which is an activation step.

In step S300, the external manipulation mode is activated. Accordingly, the driver may alight in the state of step S300 and manipulate the external switches 150.

The driver can ensure the appropriateness of the relative positions of the agricultural tractor 100 and the implement while manipulating the forward switch 153 and the reverse switch 154. Furthermore, the driver may adjust the height of the end of the connection link so that the connection link present in the agricultural tractor 100 and the implement can be coupled to each other by manipulating the lifting switch 151 and the lowering switch 152.

Meanwhile, in step S300, the agricultural tractor 100 must not move forward or rearward against the driver's intention, and any accidental operation must be prevented. Accordingly, this point needs to be taken into consideration, and will be described later.

It is obvious that even in step S300, when any one of the first entry condition, the second entry condition, and the standby maintenance condition is not satisfied without the driver's manipulation, the method returns to step S100.

Next, operational examples based on the above-described control method will be described.

### (Operational Example 1 - See FIG. 3)

Operational Example 1 is directed to an operation in an external operation mode, which is performed on flat ground or on a slope where friction with the ground allows the agricultural tractor 100 to remain stationary when there is no driving force of the engine.

When the driver sets the external manipulation mode by manipulating the mode switch 160, the controller 130 enters step S100 and checks the current status of the agricultural tractor 100. Furthermore, when the first entry condition is satisfied, the controller 130 enters step S200.

It is obvious that when the first entry condition is not satisfied through the checking, the controller 130 maintains step S100 and notifies the driver of unsatisfied detailed conditions.

When the vehicle speed remains at 0 km/h for a set predetermined period of time and the first entry condition is satisfied, i.e., when the second entry condition is satisfied, in step S200, the controller 130 enters step S300. Accordingly, the driver may alight from the agricultural tractor 100 and manipulate the external switches 150.

That is, after entering step S300, the driver may alight from the agricultural tractor 100 and manipulate the reverse switch 154 (which may be a forward switch) at a specific time point t1. Then, the controller 130 generates a control signal based on a predetermined current value and controls the transmission 110. In this case, the control signal is input to a solenoid valve for operating the transmission 110. Accordingly, the current value of the control signal may be assumed to be proportional to the driving force required to operate the transmission 110.

Preferably, the controller 130 needs to be implemented to generate a control signal with a delay (t2 - t1 = Δt) rather than simultaneously with the manipulation of the reverse switch 154. The reason for this is that there may be erroneous manipulation attributable to the driver's mistake or other accidental circumstances in the workplace. Accordingly, it is necessary to prevent the driver from being embarrassed by sudden movements caused by unintended manipulations. Meanwhile, by designing a delay (t2 - t1 = Δt), temporary erroneous manipulations attributable to momentary mistakes or other accidental situations may be prevented. That is, the slight delay (t2 - t1 = Δt) is designed to ensure that the agricultural tractor 100 operates only according to the driver's intention.

After the delay time (t2 - t1 = Δt) has elapsed, the controller 130 generates a control signal at the time point t2 at which the delay time (t2 - t1 = Δt) has passed.

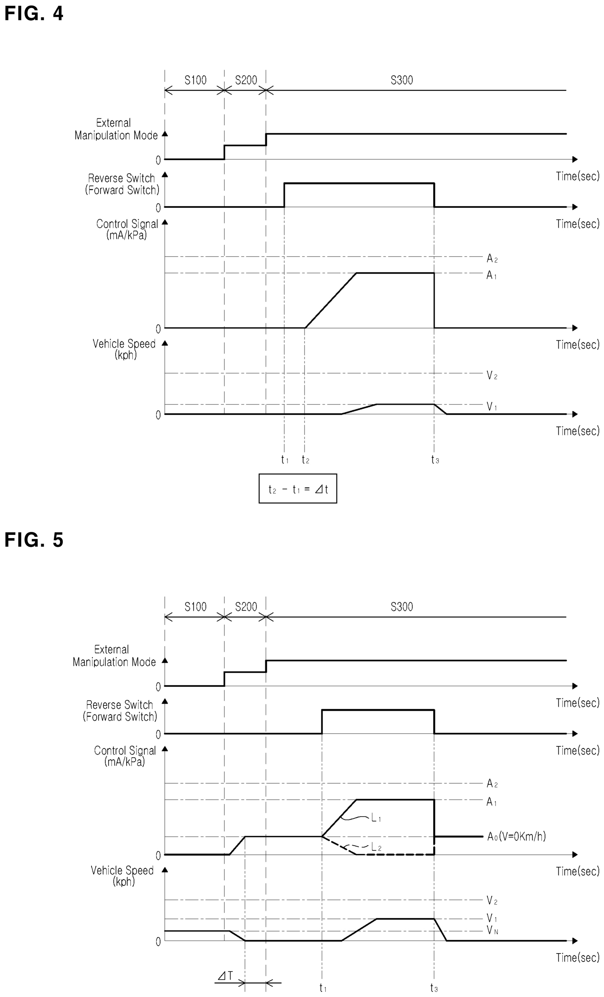

However, as in the example of FIG. 4, it may be preferably contemplated that a setting is made such that the current value of the control signal increases gradually to a target value A1. This minimizes the shock caused by the initial excessive movement of the agricultural tractor 100, and provides the driver with the flexibility to manipulate the external switches 150 while checking whether the vehicle is moving as intended when the vehicle is initially moving slowly. In other words, this is also a safety-conscious design consideration.

In the example of FIG. 4, when the current intensity of the control signal reaches the target value A1, the current intensity of the control signal is fixed at the target value A1.

When the current intensity of the control signal becomes equal to or higher than a limit value A2 due to an unexpected situation, the controller 130 may be implemented to recognize this as an emergency situation and take necessary control measures, such as the turning off of the engine, the applying of an emergency brake, or the returning of the vehicle speed to 0 km/h.

Once the agricultural tractor 100 has moved as intended by the driver, the driver releases the manipulation of the reverse switch 154. The controller 130 then immediately stops generating the control signal at the same time t3 that the manipulation of the reverse switch 154 is released. There is no delay in this case. The reason for this is that the agricultural tractor 100 needs to stop at the position intended by the driver and safety-related accidents caused by unintended movements need to be prevented.

However, the agricultural tractor 100 may be moved slightly further due to inertia. Accordingly, the driver needs to appropriately select the timing t3 at which the manipulation of the reverse switch 154 is released by considering such inertial movement.

Meanwhile, the vehicle speed is generated at a time point, slightly later than the time point at which the control signal for the reverse movement of the agricultural tractor 100 is input to the transmission 110, due to friction and the inertia of the agricultural tractor 100.

In addition, for safety reasons, it is desirable to ensure that the vehicle speed does not exceed a first limit vehicle speed V₁, which is a target speed. However, when a second limit vehicle speed V₂, which is the maximum limit vehicle speed higher than the first limit vehicle speed V₁, is exceeded due to an unexpected situation, the controller 130 may be implemented to recognize this as an emergency and take necessary measures, such as the turning off of the engine or the returning of the vehicle speed to 0 km/h.

When the vehicle speed exceeds the first limit vehicle speed V₁ but remains below the second limit vehicle speed V₂ (hereinafter, this range is referred to as the "intermediate range"), control via the controller 130 may be considered.

In the intermediate range, even when the vehicle speed exceeds the first limit vehicle speed V₁, it remains lower than the second limit vehicle speed V₂, which is set as a critical point that could put the driver at risk.

Furthermore, according to the present invention, the vehicle speed increases with a gradient to the first limit vehicle speed V₁. Accordingly, the increase in vehicle speed in the non-hazardous intermediate range does not cause significant confusion to the driver.

In contrast, when the controller 130 controls the vehicle speed to the first limit vehicle speed V₁ in the intermediate range, unexpected deceleration may act as a factor that causes confusion to the driver. Accordingly, the driver may be put at risk due to erroneous manipulation attributable to the driver's confusion, or the like.

Accordingly, when the vehicle speed is within the intermediate range, but not yet at the second limit vehicle speed V₂, it may be most desirable for the controller 130 not to perform any special control, such as the rotation of a swash plate (in the case where a hydrostatic transmission is employed), to return the vehicle speed to the first limit vehicle speed V₁. For example, in the intermediate range, the controller 120 may be implemented to control the transmission 110 with a control signal based on the current value at the first limit vehicle speed V₁. It is obvious that when the vehicle speed exceeds the second limit vehicle speed V₂, the controller 120 will perform emergency control to stop the agricultural tractor 100 as described above.

### (Operational Example 2 - See FIG. 5)

Operational Example 2 is directed to an operation in external operation mode that is performed on a slope where the agricultural tractor 100 does not remain stationary due to a slope but can move, for example, at a slight vehicle speed.

When the driver sets the external manipulation mode by manipulating the mode switch 160, the controller 130 enters step S100 and checks the current status of the agricultural tractor 100. When the first entry condition is satisfied, the controller 130 enters step S200. In this case, a current vehicle speed V_{N} is not 0 km/h, but is sufficient to satisfy a vehicle speed requirement in the first entry condition.

Then, the controller 130 enters step S200 from step S100.

In step S200, the standby maintenance condition ('the vehicle speed is 0 km/h') needs to be satisfied. Accordingly, the controller 130 controls the transmission 110 so that the vehicle speed V remains at 0 km/h. For example, in the case of a hydrostatic transmission, the vehicle speed V may be set to 0 km/h by slightly rotating a swash plate from a neutral position.

When the vehicle speed V reaches 0 km/h due to the operation of the transmission 110, the standby maintenance condition is satisfied. Thereafter, when the vehicle speed V remains at 0 km/h for a predetermined period of time ΔT and the first entry condition is satisfied, i.e., the second entry condition is satisfied, the controller 130 enters step S300.

In step S300, when the driver moves the agricultural tractor 100 by manipulating the reverse switch 154 (or the forward switch) and then releases the manipulation, the controller 130 controls the transmission 110 by generating a control signal with a current value A0 that sets the vehicle speed V to 0 km/h.

For reference, the delay time and the stopping of the agricultural tractor 100 may be described in the same manner as in operational example 1.

However, in the graph of the control signal in FIG. 5, the solid line L1 represents the intensity of the current value of the control signal when the slope increases in the direction in which a vehicle travels. Furthermore, in the graph of the control signal in FIG. 5, the dotted line L2 represents the intensity of the current value of the control signal when the slope decreases in the direction in which the vehicle travels.

### <First Modification>

A first modification is a modification of the first embodiment of the present invention.

In the first embodiment, the forward switch 153 and the reverse switch 154 are intended to input forward and reverse commands to the controller 120. However, when the manipulation thereof is released, the controller 130 is implemented to recognize it as a stop command to stop the agricultural tractor 100. That is, in the first embodiment, not only forward and reverse driving commands but also stop commands may be made by manipulating the forward switch 153 and the reverse switch 154.

In contrast, in the first modification, the forward switch 153 and the reverse switch 154 are implemented to input only forward and reverse commands, and a stop command is input by the neutral switch 155.

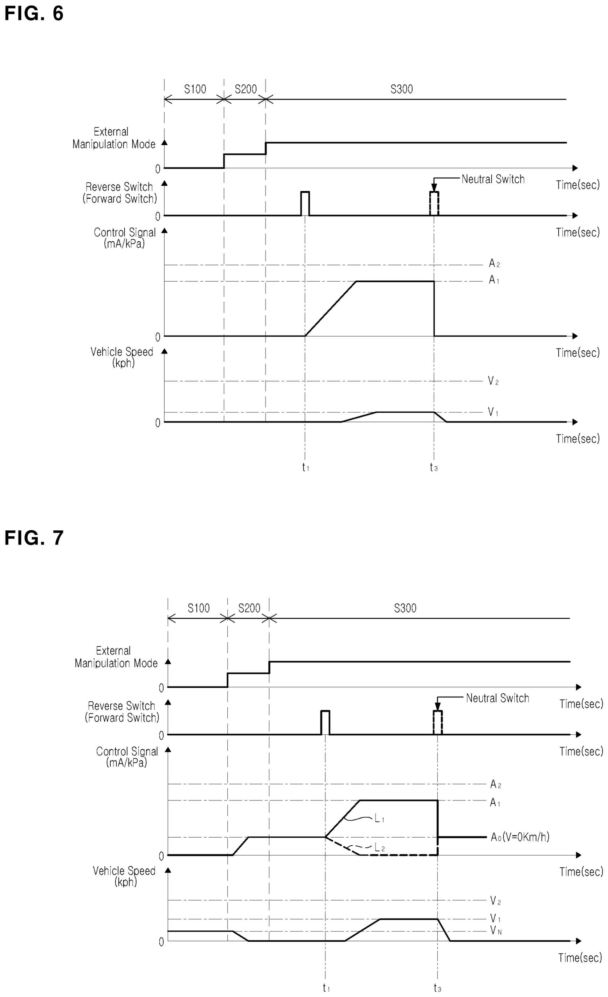

For example, FIG. 6 shows an operational example that follows the first modification and is performed on flat ground. For example, FIG. 7 shows an operational example that follows the first modification and is performed on a slope.

As can be seen in FIGS. 6 and 7, the forward switch 153 or reverse switch 154 may only input a forward or reverse command to move the agricultural tractor 100. Instead, a stop command for the agricultural tractor 100 may be input via the neutral switch 155. In this case, the stop command is a command to return the vehicle speed to 0 km/h. Accordingly, when the neutral switch 155 is manipulated by the driver, the controller 130 controls the transmission 110 to return the vehicle speed to 0 km/h.

That is, the first embodiment and the first modification differ from each other in terms of the method by which the controller 130 recognizes a command to set the agricultural tractor 100 to a vehicle speed of 0 km/h while the agricultural tractor 100 is moved by external manipulation. This will be further described using the example of a case where the forward switch 153 and the reverse switch 154 are provided as button-type switches.

As illustrated in FIGS. 3 to 5, in the first embodiment, the controller 130 performs the operation of moving the agricultural tractor 100 only when the driver presses and holds the forward switch 153 or reverse switch 154. Furthermore, when the driver releases the manipulation of the forward switch 153 or reverse switch 154, the controller 130 recognizes this as a command to return the vehicle speed to 0 km/h. Accordingly, the controller 130 stops the operation of moving the agricultural tractor 100.

Meanwhile, as illustrated in FIGS. 6 and 7, in the second embodiment, when the driver presses the forward switch 153 or reverse switch 154, the controller 130 performs the operation of moving the agricultural tractor 100. Furthermore, when the neutral switch 155 is pressed, the controller 130 recognizes this as a command to return the vehicle speed to 0 km/h. Accordingly, the controller 130 stops the operation of moving the agricultural tractor 100.

### <Second Modification>

The second modification is an application of the first embodiment of the present invention.

In the foregoing description, a brake for stopping wheels has not been given significant consideration. In contrast, in the second modification, the brake is provided as an electronic brake that can be electronically controlled.

The present invention is intended to control the driving of the agricultural tractor 100 from the outside of the agricultural tractor 100. Accordingly, it may be necessary to urgently stop the agricultural tractor 100 when an emergency situation or accidental situation occurs. Therefore, the electronic brake that can be operated by a control signal from the controller 130 may be more preferably considered.

When the electronic brake is applied, the present invention may be implemented more reliably even in terms of the external manipulation mode.

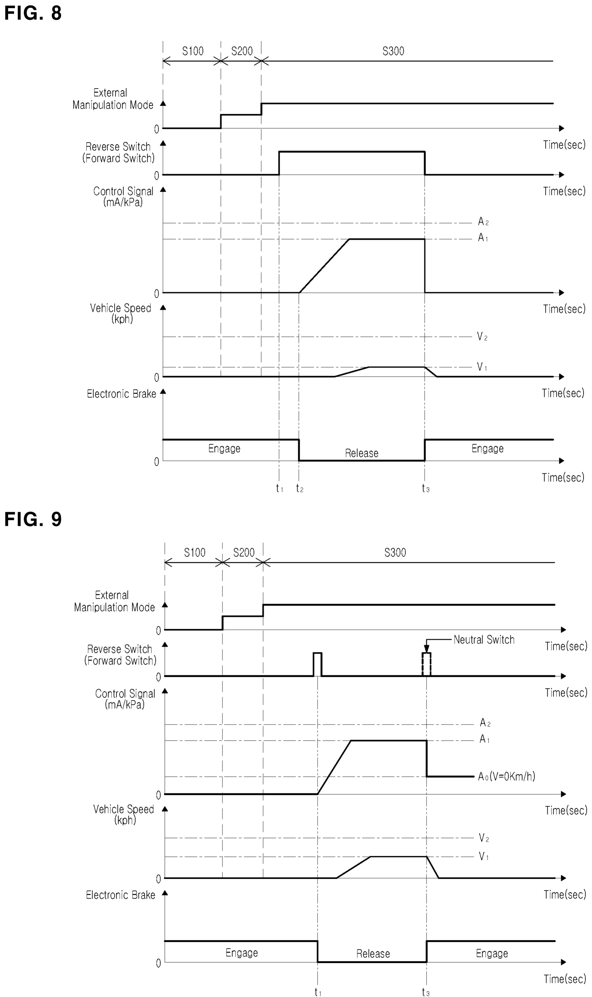

For example, an operational example that is performed on flat ground, as shown in FIG. 8, does not differ from the operational examples of FIGS. 3 and 4. However, in the operational example of FIG. 8, before time point t2 at which a control signal is generated after a drive command has been input and after time point t3 at which a stop command is input, the controller 130 brings the agricultural tractor 100 to a stop by applying the electronic brake.

Furthermore, the operational example of FIG. 9 shows operating status on a slope.

As shown in FIG. 9, even on a slope, the electronic brake is operated, so that unlike in the operational example of FIG. 5, the vehicle speed may be maintained at 0 km/h until a drive command is input and then a control signal is generated. Accordingly, the controller 130 does not need to generate a special control signal intended to control the transmission 110 to maintain the vehicle speed at 0 km/h. This also applies after a stop command has been input, so that the controller 130 maintains the agricultural tractor 100 at 0 km/h by using the electronic brake.

That is, according to the second modification, the controller 130 releases the engagement of the electronic brake only during the time interval in which the agricultural tractor 100 needs to be moved forward or rearward by manipulating the external switches 150. Furthermore, the agricultural tractor 100 is stopped by the engagement of the electronic brake during the remaining time intervals, excluding the time interval in which the agricultural tractor 100 is moved according to the driver's intention, so that stability is improved.

In the case where the electronic brake is applied as described above, the first and second entry conditions mentioned above need to include 'the engagement of the brake is maintained.'

It is obvious that the technical features of the second modification may be applied to the first embodiment or first modification without change.

### <Second Embodiment>

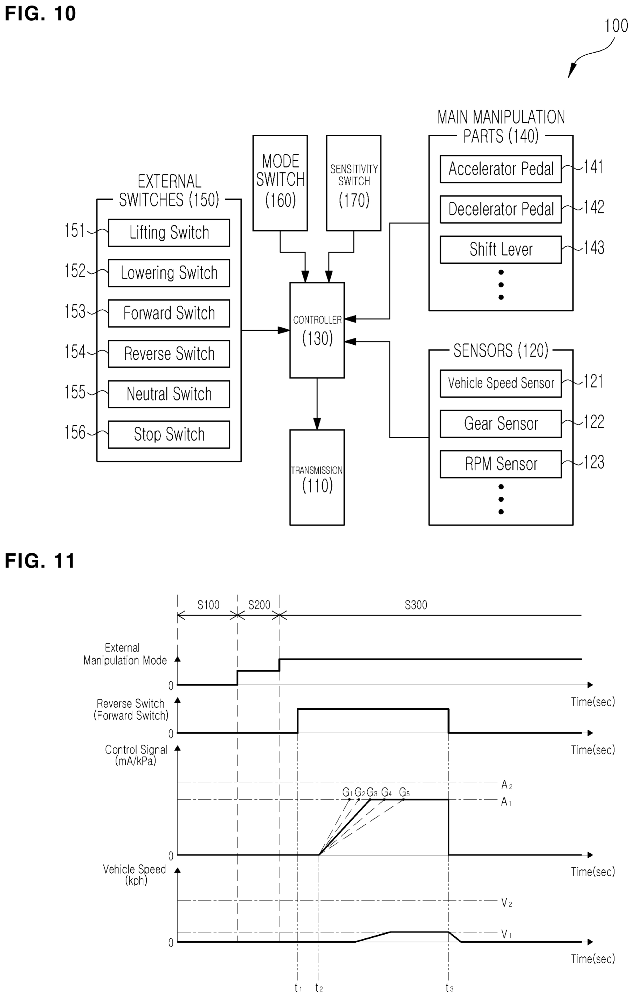

FIG. 10 is a block diagram of an agricultural tractor 100 according to a second embodiment of the present invention.

The agricultural tractor 100 of FIG. 10 includes a transmission 110, sensors 120, a controller 130, main manipulation parts 140, external switches 150, a mode switch 160, and a sensitivity switch 170.

That is, according to the present embodiment, the agricultural tractor 100 further includes the sensitivity switch 170 than that of the first embodiment.

The transmission 110, the sensors 120, the controller 130, the main manipulation parts 140, the external switches 150, and the mode switch 160 are the same as in the first embodiment. Accordingly, the second embodiment will be discussed with a focus only on the sensitivity switch 170 and related details.

The sensitivity switch 170 is provided to adjust the sensitivity of a control signal from the controller 130, and may be disposed in a region in which a driver's seat is present, together with the main manipulation parts 140.

The sensitivity switch 170 is provided to ensure that the current value of the control signal reaches a determination value, determined by a target vehicle speed, with a preferably set gradient.

The target vehicle speed may be, for example, the first limit vehicle speed V₁. In this case, the determination value is the target value A1, which is the current value of the intensity required to maintain the first limit vehicle speed V₁.

The driver may set the gradient, with which the current value of the control signal increases to the determination value, by using the sensitivity switch 170. As previously mentioned, the determination value may be the target value A1.

According to an example, the sensitivity switch 170 may be provided to select some set gradient values G1, G2, G3, G4, and G5.

According to another example, the sensitivity switch 170 may be provided as a dial structure to allow a desirable gradient value to be selected from among successive gradient values.

According to the second embodiment described above, for example, as shown in FIG. 11, when a forward command is input by manipulating the forward switch 153 or a reverse command is input by manipulating the reverse switch 154, the current value of a control signal from the controller 110 reaches a determination value along the gradient set by the sensitivity switch 170.

For reference, drivers of the agricultural tractor 100 may have various physical and age conditions. For example, some drivers may be able to react rapidly to their surroundings, while others may not. Accordingly, according to the present embodiment, the driver may ensure sufficient time for an appropriate response by increasing or decreasing the gradient with which the current value of the control signal increases.

As discussed above, the present embodiment is implemented as a user-responsive type. That is, according to the present embodiment, the driver may set an appropriate gradient so that the current value of the control signal can increase in accordance with his or her response characteristics.

Although the speed and stability of work need to be pursued together, they are mutually exclusive values. However, according to the present embodiment, it may be possible to achieve speed while maintaining stability by taking into consideration the driver's response characteristics.

It is obvious that the sensitivity switch 170 applied to the second embodiment may be applied not only to the first embodiment but also to both the first and second modifications.

The above-described embodiments merely illustrate preferred examples of the present invention, and may have various forms of application. Therefore, the present invention should not be construed as limited to the above-described content. Instead, the scope of the present invention should be understood based on the scope of the separately described claims and their equivalents.

## Claims

1. An agricultural work vehicle, comprising:
a transmission (110) configured to be electronically controlled, and provided to vary speed of a work vehicle (100);
a controller (130) configured to control the transmission (110);
main manipulation parts (140) provided in a region, in which a driver's seat is present, to input commands to drive the work vehicle (100) to the controller (130);
external switches (150) configured to input commands to move the work vehicle (100) forward or rearward from an outside independently of the main manipulation parts (140); and
a mode switch (160) configured to set external manipulation mode in which the external switches (150) can be manipulated;
wherein the external switches (150) comprise:
a forward switch (153) configured to input a forward command to move the work vehicle (100) forward; and
a reverse switch (154) configured to input a reverse command to move the work vehicle (100) rearward.

2. The agricultural work vehicle of claim 1, further comprising a sensitivity switch (170) configured to adjust sensitivity of a control signal from the controller (130);
wherein, when a forward command is input by manipulating the forward switch (153) or a reverse command is input by manipulating the reverse switch (154), a current value of the control signal from the controller (130) reaches a determination value, determined by a target vehicle speed, with a gradient set by the sensitivity switch (170).

3. The agricultural work vehicle of claim 1, wherein the external switches (150) further comprise a neutral switch (155) configured to control the speed of the work vehicle (100) to 0 km/h.

4. The agricultural work vehicle of claim 1, wherein the controller (120) controls the speed of the work vehicle to 0 km/h when manipulation of the forward switch (153) or the reverse switch (154) is released.

5. The agricultural work vehicle of claim 1, further comprising an electronic brake configured to be electronically controlled;
wherein the controller (130) releases engagement of the electronic brake only during a time interval in which the work vehicle (100) is to be moved forward or backward by manipulation of the external switches (150).

6. A method of controlling an agricultural work vehicle, the method comprising:
a deactivation step <S100> in which external manipulation mode is deactivated;
an activation step <S300> in which the external manipulation mode is activated after the deactivation step <S100>, so that the work vehicle (100) can be moved forward or backward by manipulating a forward switch (153) or reverse switch (154) from an outside; and
a manipulation standby step <S200> in which manipulation of the forward switch (153) or reverse switch (154) is waited for before entering the activation step <S300> from the deactivation step <S100>;
wherein, when a mode switch (160) is manipulated into the external manipulation mode by a driver and a first entry condition for entry to the manipulation standby step <S200> from the deactivation step <S100> and a second entry condition for entry to the activation step <S300> from the manipulation standby step <S200> are satisfied, the method enters the activation step <S300>.

7. The method of claim 6, wherein the first entry condition includes 'a gear is engaged,' 'a parking brake is released,' and 'an engine RPM satisfies a predetermined condition.'

8. The method of claim 6, wherein, when the first and second entry conditions are satisfied in a state in which a standby maintenance condition for maintenance of the manipulation standby step <S200> has been satisfied, the method enters the activation step <S300>.

9. The method of claim 8, wherein the standby maintenance condition is 'a vehicle speed is 0 km/h.'

10. The method of claim 6, wherein the second entry condition includes 'a vehicle speed is maintained at 0 km/h for a predetermined period of time' and 'the first entry condition is maintained continuously.'

11. The method of claim 6, wherein, when the second entry condition is not satisfied, the method enters the deactivation step <S100> from the manipulation standby step <S200>.

12. The method of claim 6, wherein, when a forward command is input by manipulating the forward switch (153) or a reverse command is input by manipulating the reverse switch (154) in the activation step <S300>, a current value of a control signal from a controller (130) reaches a determination value, determined by a target vehicle speed, with a set gradient.

13. The method of claim 12, wherein, when a vehicle speed exceeds a first limit vehicle speed, which is the target vehicle speed, and a second limit vehicle speed, which is set to be higher than the first limit vehicle speed, in the activation step <S300>, the work vehicle (100) is stopped.

14. The method of claim 13, wherein, in an intermediate range higher than the first limit vehicle speed but lower than the second limit vehicle speed, control intended to return the vehicle speed to the first limit vehicle speed is not performed.

15. The method of claim 6, wherein, when a neutral switch (155) is manipulated by the driver in the activation step <S300>, a vehicle speed is returned to 0 km/h.

16. The method of claim 6, wherein, when the work vehicle (100) is equipped with an electronic brake, the first and second entry conditions include 'engagement of a brake is maintained.'
